Europäisches Patentamt

European Patent Office

Office européen des brevets

(11) Veröffentlichungsnummer: **0 384 243 B1**

## EUROPÄISCHE PATENTSCHRIFT

(45) Veröffentlichungstag der Patentschrift: **21.12.94**

(21) Anmeldenummer: **90102623.7**

(22) Anmeldetag: **10.02.90**

(51) Int. Cl.⁵: **B29C 33/60**, B29C 33/62, B29C 33/64

(54) Zusammensetzungen mit Dichlormonofluorethanen.

(30) Priorität: **20.02.89 DE 3905125**

(43) Veröffentlichungstag der Anmeldung:
**29.08.90 Patentblatt 90/35**

(45) Bekanntmachung des Hinweises auf die
Patenterteilung:
**21.12.94 Patentblatt 94/51**

(84) Benannte Vertragsstaaten:
**BE DE ES FR GB IT NL**

(56) Entgegenhaltungen:
**EP-A- 0 307 832**
**DE-A- 3 335 870**

**KUNSTSTOFFE, Bd. 72, Nr. 8, August 1982,
Seiten 461-462, München, DE; DR. K.
SCHARDT: "EINFLUSSGROESSEN BEIM EIN-
SATZ VON TRENNMITTELN"**

**KUNSTSTOFFE, Bd. 75, Nr. 2, Februar 1985,
Seiten 92-93, München, DE; G. RATHJE:
"ENTWICKLUNGSSTAND BEI TRENNMITTELN
FUER DIE KUNTSTOFFVERARBEITUNG"**

(73) Patentinhaber: **Kali-Chemie Aktiengesellschaft**
**Hans-Böckler-Allee 20**
**D-30173 Hannover (DE)**

(72) Erfinder: **Buchwald, Hans**
**Am Rodelberg 51 A**
**D-3003 Ronnenberg 3 (DE)**
Erfinder: **Raschkowski, Boleslaus**
**In der Hespe 246**
**D-3061 Wiedensahl (DE)**

(74) Vertreter: **Lauer, Dieter, Dr.**
**c/o Kali-Chemie Aktiengesellschaft**
**Hans-Böckler-Allee 20**
**D-30173 Hannover (DE)**

**Beschreibung**

Die vorliegende Erfindung betrifft flüssige Zusammensetzungen, die ein Dichlormonofluorethan als Lösungsmittel und wenigstens ein Agens mit trennmittelwirksamen Eigenschaften enthalten, sowie die Verwendung dieser Zusammensetzungen und ein Verfahren zu deren Herstellung.

In vielen industriellen Anwendungsbereichen, die Arbeitsvorgänge wie Gießen, Formen, Pressen usw. umfassen - z.B. bei der Herstellung und Verarbeitung von Kunststoffen, Schaumstoffen, Baustoffen, Gummiartikeln, Reifen, Metallen, Gläsern, Keramikprodukten usw. - werden heute Trennmittel, Gleitmittel oder Schalmittel benötigt. Trennmittel sind in diesem Zusammenhang feste oder flüssige Filme, die die Adhäsionskräfte zwischen zwei aneinandergrenzenden Oberflächen verringern, d.h. ihr Verkleben verhindern. Gleitmittel sind Zusatzstoffe für plastische Massen, zum beispiel Preßmassen und Spritzgußmassen. Sie werden benötigt um die Füllstoffe leichter gleitend und die Preßmassen damit leichter verformbar zu machen. Die Trenn-, Gleit- bzw. Schalmittel enthalten trennmittelwirksame Komponenten, zum Beispiel in Form von trockenen Pulvern, von trockenen Filmen oder Naßfilmen, Pasten, eingebrannten Filmen, Lösungen oder Dispersionen. Eine Sonderform stellen die sogenannten internen trennmittelwirkkamen Komponente dar, die in das zu entformende Gut eingemischt werden und sich entweder an der Oberfläche anzureichern vermögen oder eine schnellere Aushärtung der Oberfläche bewirken, so daß es zwischen Formwand und Formteil zu keinem Verbund kommt.

Vielfach müssen bei obigen Arbeitsvorgängen von Zeit zu Zeit die Rückstände des Agens mit trennmittelwirksamen Eigenschaften mit Hilfe von Lösungsmitteln aus der Form entfernt werden. Gewöhnlich werden zur Reinigung der Formen Lösungsmittel wie Kohlenwasserstoffe und Chlorkohlenwasserstoffe verwendet, von denen die ersten feuergefährlich sind und die zweiten Hautreizungen verursachen.

Nach einem Verfahren aus der deutschen Offenlegungsschrift 25 52 236 ist ein Formtrennmittel für die Herstellung geformter Kautschukprodukte und die Verformung von Polyurethanschaumstoffen bekannt. Die dort verwendete Formtrennmasse enthält Paraffinwachs, Leuchtöl und Natriumseifen von Tallölsäuren in einem paraffinischen Grundöl. Das eingesetzte Formtrennmittel muß in Wasser löslich oder emulgierbar sein, um durch Sprühen oder Waschen mit warmem Wasser das Formtrennmittel vom Formprodukt trennen zu können.

In der deutschen Offenlegungsschrift 33 35 870 wird die Herstellung von speziellen Wachsderivaten beschrieben, die zum Beispiel als Trennmittelbestandteile, insbesondere aber als Kühlschmiermittel, verwendet werden können, wobei als Lösungsmittel die Fluorchlorkohlenwasserstoffe Trichlormonofluormethan, 1,1,2-Trichlor-1,2,2-trifluorethan, 1,1,2,2-Tetrachlordifluorethan, Tetrachlormonofluorethan und/oder Trichlordifluorethan als geeignet angegeben werden.

Nach G. Rathje: "Entwicklungsstand bei Trennmitteln für die Kunststoffverarbeitung", Kunststoffe Bd. 75, Nr. 2 (1985), Seiten 92 - 93, sind Kombinationen von Trichlorfluormethan mit Spezialbenzinen als Trennmittel bekannt.

Die Aufgabe der Erfindung ist es, neue verbesserte flüssige Zusammensetzungen von Agentien mit trennmittelwirksamen Eigenschaften bereitzustellen, die eine sparsame Verwendung gestatten, die ohne häufiges Reinigen der benutzten Formen verwendet werden können und deren Lösungsmittelbestandteile eine erhöhte Lösekraft besitzen.

Die Aufgabe wird gelöst durch die erfindungsgemäßen Zusammensetzungen, Verwendungen und Verfahren.

Die vorliegende Erfindung stellt flüssige Zusammensetzungen mit verbesserten Eigenschaften zur Verfügung, die ein Lösungsmittel und mindestens ein Agens mit trennmittelwirksamen Eigenschaften enthalten, wobei als Lösungsmittel wenigstens eines der Isomere des Dichlormonofluorethans enthalten ist und das trennmittelwirksame Agens in einer Menge von 0,1 bis 80 Gew.-%, vorzugsweise 0,1 bis 35 Gew.-%, bezogen auf das Gesamtgemisch vorliegt.

Als Dichlormonofluorethan im Sinne der Erfindung können die Isomere 1,2-Dichlor-1-fluorethan (R141), 1,1-Dichlor-2-fluorethan (R141a) oder 1,1-Dichlor-1-fluorethan (R141b) einzeln oder miteinander in beliebigen Gemischen vorliegen. Vorzugsweise wird aber 1,1-Dichlor-1-fluorethan (R141b) verwendet. Weiterhin können die Dichlormonofluorethan-Isomere oder deren Gemische mit anderen Fluorchlorkohlenwasserstoffen mit 1 bis 6 C-Atomen, insbesondere z.B. Trichlormonofluormethan, Trichlortrifluorethan, Tetrachlordifluorethan, Tetrachlormonofluorethan, Trichlordifluorethan, Monochlorhexafluorpropan, Dichlorpentafluorpropan oder deren Gemische, in erfindungsgemäßen Zusammensetzungen eingesetzt werden. Die Dichlormonofluorethan-Isomere können in erfindungsgemäßen Zusammensetzungen auch in Form eines Azeotrops mit anderen Lösungsmitteln - z.B. mit Fluorchlorkohlenwasserstoffen, Fluorkohlenwasserstoffen, Chlorkohlenwasserstoffen, Kohlenwasserstoffen, Alkoholen, Ethern usw. - enthalten sein.

Die erfindungsgemäßen Zusammensetzungen werden weiterhin dadurch gekennzeichnet, daß das trennmittelwirksame Agens ausgewählt ist aus der Gruppe der Wachse, Wachsderivate, Silicone, Metallseifen, Fette, Öle, Polymere, Fluorkohlenstoffe, anorganischen Pulver, vorzugsweise Wachse, Wachsderivate, Metallseifen oder Silicone.

Als Wachse im Sinne der Erfindung werden in einer Variante natürliche Wachse tierischer oder pflanzlicher Herkunft, vorzugsweise natürliche Wachse mit einem Erweichungspunkt von mindestens 40 °C, eingesetzt.

In einer anderen Variante der Erfindung sind die Wachse ungesättigte langkettige Ester von Carbonsäuren mit Monoalkoholen mit insgesamt 34 bis 50 C-Atomen. Bevorzugt sind hierbei Fettsäureester, die eine Iodzahl von unter 95, vorzugsweise von 30 bis 95, insbesondere 75 bis 95 aufweisen. Gemische solcher Fettsäureester sind kommerziell verfügbar und beispielsweise im Handbook of Chemistry and Physics, 55. Auflage, Seite C-753 beschrieben.

Eine weitere Variante ist dadurch gekennzeichnet, daß die Wachsderivate Derivate sind, die durch Sulfochlorierung, Sulfidierung oder Fluorwasserstoffbehandlung von ungesättigten langkettigen Estern von Carbonsäuren mit Monoalkoholen mit insgesamt 34 bis 50 C-Atomen erhalten werden. Die durch Fluorwasserstoffbehandlung erhaltenen Derivate sind zum Beispiel aus der deutschen Offenlegungsschrift 33 35 870 bekannte, fluorenthaltende, wachsartige Massen, deren Fluorgehalt in einem weiten Bereich variierbar ist. Der Fluorgehalt dieser Addukte von Fluorwasserstoff an diese ungesättigten langkettigen Ester liegt z.B. im Bereich von 0,1 bis 4,3 Gew.-%. Eine völlig andere Art von Derivaten der langkettigen ungesättigten Ester, die durch Fluorwasserstoffbehandlung erhältlich sind, sind ölige Produkte (nachstehend Sesquimere genannt) die gegenüber dem Ausgangswachs die 1,1 bis 1,9-fache Molmasse und einen Gehalt an nicht umgesetztem Wachs von unter 1 Gew.-% enthalten. Diese Wachsderivate enthalten - wenn überhaupt - nur sehr geringe Gehalte an gebundenem Fluor. In der Regel liegt der Fluorgehalt unter 0,1 Gew.-% und die Iodzahl in einem Bereich von 5 bis 20.

Es können auch andere Wachsderivate, z.B. durch Hydrierung von ungesättigten langkettigen Estern von Carbonsäuren mit Monoalkoholen mit insgesamt 34 bis 50 C-Atomen erhaltene, nunmehr teilgesättigte oder vollständig gesättigte Derivate eingesetzt werden. In diesem Zusammenhang werden unter teilgesättigten Derivaten solche verstanden, deren Iodzahl unter der des bei der Hydrierung eingesetzten Eduktes liegt.

Weitere Wachse, die im Sinne vorliegender Erfindung verwendet werden, sind synthetische Wachse, vorzugsweise Paraffinwachse oder Polyethylenwachse. In einer Variante wird zum Beispiel ein oxidiertes Polyethylenwachs mit mittlerem Molekulargewicht von 3700 bis 4500 (viskosimetrisch) und einer Säurezahl von 20 bis 30 und einem Schmelzpunkt von 89 bis 99 °C eingesetzt.

In einer anderen Art der erfindungsgemäßen Zusammensetzungen sind Silicone enthalten. Die verwendeten Silicone können in der Form von Ölen, Fetten oder Harzen vorliegen. Die Sillicone können als solche oder in Form von Siliconölemulsionen oder Siliconpasten, die einen Konsistenzregler, beispielsweise hochdisperse Kieselsäure, in das Siliconöl eingearbeitet enthalten, verwendet werden. Siliconfette enthalten gewöhnlich Metallseifen als konsistenzregelnde Bestandteile. Die in der vorliegenden Erfindung verwendeten Siliconprodukte sind im Handel verfügbare Produkte.

Eine weitere Variante der Erfindung ist dadurch gekennzeichnet, daß die Zusammensetzungen Metallseifen, beispielsweise fettsaure Salze der Metalle Magnesium, Calcium, Zink, Aluminium oder Blei enthalten. Gegebenenfalls werden die Metallsalze der Stearinsäure eingesetzt, wobei dann das Magnesiumstearat bevorzugt ist.

Eine weitere Variante von Zusammensetzungen im Sinne der Erfindung enthält anorganische Pulver, vorzugsweise Graphit, Talkum oder Glimmer.

Es können auch andere übliche Agentien mit trennmittelwirksamen Eigenschaften wie Öle, zum Beispiel Mineral- und Esteröle in erfindungsgemäßen Zusammensetzungen verwendet werden. Weitere geeignete trennmittelwirksame Agentien sind Polymere, zum Beispiel polymere Alkohole (Polyethylenglycol), Polyamide oder Polyolefine.

In einer Abwandlung der Erfindung ist es vorgesehen, den Zusammensetzungen übliche Lösungsvermittler für das trennmittelwirksame Agens zuzusetzen. Als Lösungsvermittler kommen bekannte toxikologisch unbedenkliche Lösungsmittel mit lösungsvermittelnden Eigenschaften in Frage, die in Mengen von 1 bis 80 Gew.-%, vorzugsweise 10 bis 30 Gew.-% in den Zusammensetzungen enthalten sein können. Die Prozentangaben beziehen sich hierbei auf das Gesamtgemisch. Eine Ausführungsform dieser Abwandlung der Erfindung zeichnet sich dadurch aus, daß als Lösungsvermittler aliphatische Kohlenwasserstoffe, vorzugsweise Benzinfraktionen mit einem Siedebereich von z.B. 100 bis 140 °C, verwendet werden. Es können auch andere an sich bekannte Lösungsvermittler Verwendung finden.

Bei den Ausgestaltungen der erfindungsgemäßen Zusammensetzungen kann es vorgesehen sein, zusätzlich bis zu 1 Gew.-% bekannter Korrosionsinhibitoren zuzusetzen. Solche Korrosionsinhibitoren für Metalle wie z.B. Magnesium, Aluminium, Titan, Messing, Bronze, Stahl sind kommerziell verfügbar. Sie basieren zumeist auf Zusammensetzungen, die organische Verbindungen mit Heteroatomen wie Schwefel oder insbesondere Stickstoff enthalten. Bewährt haben sich z.B. einzelne Verbindungen oder Gemische aus der Klasse der Benzothiazole, z.B. Mercaptobenzothiazol, Benzimidazole, z.B. 2-Phenylbenzimidazol, Triazole, z.B. Benzotriazole. Tolyltriazole, Oxazoline, z.B. Alkyl- und/oder Hydroxyalkyl-substituierte Oxazoline, Amide, Amine, z.B. tert. Amine. Weiterhin können den erfindungsgemäßen Zusammensetzungen ggf. übliche Stabilisatoren, insbesondere zur Stabilisierung der Dichlormonofluorethane, zugesetzt werden. Weiterhin können konsistenzregelnde Additive enthalten sein.

Die erfindungsgemäßen Zusammensetzungen liegen entweder als Lösungen oder als Dispersionen vor, wobei unter Dispersionen sowohl Emulsionen als auch Suspensionen verstanden werden.

Die Erfindung umfaßt auch die Verwendung der Zusammensetzungen als Trenn-, Gleit- bzw. Schalmittel, z.B. bei der Kunststoff- oder Schaumstoffherstellung oder in anderen Anwendungsbereichen.

Weiterhin umfaßt die Erfindung das Verfahren zur Herstellung der erfindungsgemäßen Zusammensetzungen, wobei man in das Lösungsmittel aus der Gruppe der Dichlormonofluorethane ein oder mehrere Agentien mit trennmittelwirksamen Eigenschaften in einer auf die gesamte Zusammensetzung bezogenen Menge von 0,1 bis 80 Gew.-%, vorzugsweise 0,1 bis 35 Gew.-%, einarbeitet. Gegebenenfalls werden gleichzeitig übliche Lösungsvermittler oder andere Zusätze wie Stabilisatoren, Korrosionsinhibitoren zugegeben.

Die erfindungsgemäßen Zusammensetzungen mit Dichlormonofluorethanen als Lösungsmittel weisen verbesserte adhäsionsvermindernde Eigenschaften, hohe chemische Indifferenz und gutes Spreitungsvermögen auf. Gegenüber üblichen Trennmitteln, bei denen Kohlenwasserstoffe als Lösungsmittel verwendet werden, besitzen die erfindungsgemäßen Zusammensetzungen einen höheren Flammpunkt. Die Herstellung der erfindungsgemäßen Zusammensetzungen gestaltet sich infolge der sehr guten Lösekraft der Dichlormonofluorethane - im Gegensatz zur Herstellung von Trennmitteln unter Verwendung von z.B. Kohlenwasserstoffen als Lösungsmittel - besonders einfach. Häufig sind nämlich gute trennmittelwirksame Agentien in den bisher im Stand der Technik verwendeten Lösungsmitteln relativ schwer löslich. Ein Vorteil der erfindungsgemäßen Zusammensetzungen besteht somit darin, daß die unerwartet hohe Lösekraft der als Lösungsmittel verwendeten Dichlormonofluorethane auch die Herstellung von solchen trennmittelwirksamen Zusammensetzungen gestattet, die diese an sich schwerlöslichen trennmittelwirksamen Agentien enthalten sollen. Weiterhin ist der Einsatz der erfindungsgemäßen Zusammensetzungen anstelle herkömmlicher Trennmittelzusammensetzungen ökonomischer, da bei gleicher Anwendung weniger Trennmittelzusammensetzung verbraucht wird. Zusätzliche Vorteile zeigen sich bei längerer Verwendung der Formen z.B. darin, daß die verwendeten Formen zwischen den Arbeitsgängen seltener gereinigt werden müssen.

Die nachfolgenden Beispiele sollen die Erfindung näher erläutern, ohne sie jedoch in ihrem Umfang zu begrenzen.

Beispiel 1

Eine erfindungsgemäße Zusammensetzung wurde hergestellt aus 5 Gew.-% HF-Wachs-Addukt (bekannt als "Addukte" aus der deutschen Offenlegungsschrift 33 35 870) und 95 Gew.-% 1,1-Dichlor-1-fluorethan (R141b). Unter HF-Wachs-Addukt versteht man ein Wachsderivat, welches durch Fluorwasserstoff-Behandlung von ungesättigten langkettigen Estern von Carbonsäuren mit Monoalkoholen mit insgesamt 34 bis 50 C-Atomen erhalten wird, wobei dieses Derivat an die Doppelbindungen des Eduktes addierten Fluorwasserstoff aufweist. Die Herstellung dieses HF-Wachs-Adduktes entspricht dem Beispiel 1 der deutschen Offenlegungsschrift 33 35 870.

Die Zusammensetzung stellt eine klare Lösung dar und weist hervorragende trennmittelwirksame Eigenschaften auf.

Beispiele 2 bis 14

Analog zu Beispiel 1 wurden die weiteren in der folgenden Tabelle wiedergegebenen Beispiele 2 bis 14 von erfindungsgemäßen Zusammensetzungen hergestellt, die ebenfalls hervorragende trennmittelwirksame Eigenschaften besitzen. Die Komponenten sind in Gew.-% angegeben.

4

| Zusammensetzungs-bestandteile | Beispiel | | | | | | | | | | | | |
|---|---|---|---|---|---|---|---|---|---|---|---|---|---|
| | 2 | 3 | 4 | 5 | 6 | 7 | 8 | 9 | 10 | 11 | 12 | 13 | 14 |
| 1,1-Dichlor-1-mono-fluorethan (R141b) | 90 | 92 | 80 | 50 | 90 | 20 | 85 | 90 | 95 | 80 | 20 | 80 | 20 |
| Sesquimer * | *10 | | | | | | | | | | | | |
| Wachsester (Jodzahl 85) | | 8 | | | | | | | | | | | |
| Siliconöl (20 000mm²/s) | | | 4 | 35 | 10 | | | | | | | | |
| Paraffin (Schmelzp. 56-58 °C) | | | | | | 6 | 5 | 5 | 5 | | | | |
| Oxidiertes Poly-ethylenwachs (Schmelzp. 89-99 °C) | | | | | | | | | | 6 | 4 | 5 | |
| Polyethylenwachs (Schmelzp. 98-108 °C) | | | | | | | | | | | | | 7 |
| Magnesiumstearat | | | | | | | 10 | 5 | | | | 1 | |
| Benzinfraktion (100-140 °C) | | | 16 | 15 | | 74 | | | | 14 | 76 | 14 | 73 |
| Art der Zusammensetzung ** | L | L | L | L | L | L | L | L*** | L*** | D | D | D | D |

\* bekannt aus der deutschen Offenlegungsschrift 33 35 870 und hergestellt analog den dort angegebenen Beispielen 2 oder 3

\*\* L = klare Lösung; D = Dispersion

\*\*\* bei 25 °C

## Patentansprüche

1. Flüssige Zusammensetzung eines Agens mit trennmittelwirksamen Eigenschaften, dadurch gekennzeichnet, daß die Zusammensetzung als Lösungsmittel einen wasserstoffhaltigen Fluorchlorkohlenwasserstoff aus der Gruppe der Dichlormonofluorethane, vorzugsweise 1,1-Dichlor-1-fluorethan (R141b), enthält und daß das trennmittelwirksame Agens in einer Menge von 0,1 bis 80 Gew.-%, vorzugsweise 0,1 bis 35 Gew.-%, bezogen auf das Gesamtgemisch vorliegt.

2. Zusammensetzung nach Anspruch 1, dadurch gekennzeichnet, daß das trennmittelwirksame Agens ausgewählt ist aus der Gruppe der Wachse, Wachsderivate, Silicone, Metallseifen, Fette, öle, Polymere, Fluorkohlenstoffe, anorganischen Pulver, vorzugsweise Wachse, Wachsderivate, Metallseifen oder Silicone.

3. Zusammensetzung gemäß Anspruch 2, dadurch gekennzeichnet, daß die Wachse natürliche Wachse tierischer oder pflanzlicher Herkunft, vorzugsweise natürliche Wachse mit einem Erweichungspunkt von mindestens 40 °C, sind.

4. Zusammensetzung gemäß Anspruch 2, dadurch gekennzeichnet, daß die Wachse ungesättigte langkettige Ester von Carbonsäuren mit Monoalkoholen mit insgesamt 34 bis 50 C-Atomen sind.

5. Zusammensetzung gemäß Anspruch 2, dadurch gekennzeichnet, daß die Wachsderivate Derivate sind, die durch Sulfochlorierung, Sulfidierung oder Fluorwasserstoffbehandlung von ungesättigten langkettigen Estern von Carbonsäuren mit Monoalkoholen mit insgesamt 34 bis 50 C-Atomen erhalten werden.

6. Zusammensetzung gemäß Anspruch 2, dadurch gekennzeichnet, daß die Wachse synthetische Wachse, vorzugsweise Paraffinwachse oder Polyethylenwachse, sind,

7. Zusammensetzung gemäß Anspruch 2, dadurch gekennzeichnet, daß die Silicone in Form von Ölen, Fetten, Harzen, Pasten oder ölemulsionen vorliegen.

8. Zusammensetzung gemäß Anspruch 2, dadurch gekennzeichnet, daß die Metallseifen fettsaure Salze der Metalle Magnesium, Calcium, Zink, Aluminium oder Blei, ggf. Salze der Stearinsäure dieser Metalle, sind.

9. Zusammensetzung gemäß Anspruch 2, dadurch gekennzeichnet, daß die anorganischen Pulver Graphit, Talkum oder Glimmer sind.

10. Abwandlung der Zusammensetzung gemäß Anspruch 1, dadurch gekennzeichnet, daß übliche Lösungsvermittler in Mengen von 1 bis 80 Gew.-%, vorzugsweise 10 bis 30 Gew.-%, bezogen auf das Gesamtgemisch enthalten sind.

11. Zusammensetzung gemäß Anspruch 10, dadurch gekennzeichnet, daß als Lösungsvermittler aliphatische Kohlenwasserstoffe, vorzugsweise Benzinfraktionen mit einem Siedebereich von z.B. 100 bis 140 °C, enthalten sind.

12. Verwendung von Zusammensetzungen gemäß einem der vorangehenden Ansprüche als Trenn-, Gleitbzw. Schalmittel.

13. Verfahren zur Herstellung von Zusammensetzungen gemäß einem der Ansprüche 1 bis 11, dadurch gekennzeichnet, daß man in das Lösungsmittel Dichlormonofluorethan ein oder mehrere Agentien mit trennmittelwirksamen Eigenschaften in einer auf das Gesamtgemisch bezogenen Menge von 0,1 bis 80 Gew.-%, vorzugsweise 0,1 bis 35 Gew.-%, sowie ggf. übliche Lösungsvermittler einarbeitet.

**Claims**

1. A liquid composition of an agent having separating agent-like properties, characterised in that the composition contains a hydrogen-containing fluorochlorohydrocarbon from the group of dichloromonofluoroethanes, preferably 1,1-dichloro-1-fluoroethane (R141b), as a solvent and that the agent acting as a separating agent is present in a quantity of 0.1 to 80% by weight, preferably 0.1 to 35% by weight, relative to the total mixture.

2. A composition according to Claim 1, characterised in that the agent acting as a separating agent is selected from the group of waxes, wax derivatives, silicones, metal soaps, fats, oils, polymers,

EP 0 384 243 B1

fluorocarbons, inorganic powders, preferably waxes, wax derivatives, metal soaps or silicones.

3. A composition according to Claim 2, characterised in that the waxes are natural waxes of animal or plant origin, preferably natural waxes having a softening point of at least 40°C.

4. A composition according to Claim 2, characterised in that the waxes are unsaturated long-chain esters of carboxylic acids with monoalcohols having a total of 34 to 50 C atoms.

5. A composition according to Claim 2, characterised in that the wax derivatives are derivatives which are obtained by sulphochlorination, sulphiding or hydrogen fluoride treatment of unsaturated long-chained esters of carboxylic acids with monoalcohols having a total of 34 to 50 C atoms.

6. A composition according to Claim 2, characterised in that the waxes are synthetic waxes, preferably paraffin waxes or polyethylene waxes.

7. A composition according to Claim 2, characterised in that the silicones are in the form of oils, fats, resins, pastes or oil emulsions.

8. A composition according to Claim 2, characterised in that the metal soaps are fatty acid salts of the metals magnesium, calcium, zinc, aluminium or lead, optionally salts of the stearic acid of these metals.

9. A composition according to Claim 2, characterised in that the inorganic powders are graphite, talc or mica.

10. A modification of the composition according to Claim 1, characterised in that conventional solubilisers are contained in quantities of 1 to 80% by weight, preferably 10 to 30% by weight, relative to the total mixture.

11. A composition according to Claim 10, characterised in that aliphatic hydrocarbons, preferably petroleum fractions having a boiling range of for instance 100 to 140°C, are contained as solubilisers.

12. The use of compositions according to one of the preceding Claims as a separating agent, internal lubricant or parting agent.

13. A process for the preparation of compositions according to one of Claims 1 to 11, characterised in that one or more agents having separating agent-like properties in a quantity of 0.1 to 80% by weight, preferably 0.1 to 35% by weight, relative to the total mixture, and optionally conventional solubilisers are incorporated into the solvent dichloromonofluoroethane.

**Revendications**

1. Composition liquide d'un agent ayant des propriétés d'action séparatrice, composition caractérisée en ce qu'elle contient comme solvant un hydrocarbure fluorochloré comportant de l'hydrogène, choisi dans l'ensemble formé par les dichloromonofluoréthanes, avantageusement le 1,1-dichloro-1-fluoréthane ("R141b"), et en ce que l'agent doué d'une action séparatrice est présent en une quantité de 0,1 à 80 % en poids, avantageusement 0,1 à 35 % en poids, par rapport au mélange toal.

2. Composition selon la revendication 1, caractérisée en ce que l'agent doué d'une activité séparatrice est choisi dans l'ensemble constitué par des cires, des dérivés de cire, des silicones, des savons de métaux, des graisses, des huiles, des polymères, des hydrocarbures fluorés, de la poudre minérale, avantageusement des cires, des dérivés de cire, des savons de métaux ou des silicones.

3. Composition selon la revendication 2, caractérisée en ce que les cires sont des cires naturelles d'origine animale ou végétale, avantageusement des cires naturelles ayant un point de ramollissement d'au moins 40°C.

4. Composition selon la revendication 2, caractérisée en ce que les cires sont des esters insaturés à longue chaîne d'acides carboxyliques avec des mono-alcools comportant au total 34 à 50 atomes de C.

7

**5.** Composition selon la revendication 2, caractérisée en ce que les dérivés des cires sont des dérivés que l'on obtient par sulfochloration, sulfuration ou traitement par du fluorure d'hydrogène, d'esters insaturés à longue chaîne d'acides carboxyliques avec des mono-alcools comportant au total 34 à 50 atomes de carbone.

**6.** Composition selon la revendication 2, caractérisée en ce que les cires sont des cires synthétiques, avantageusement des cires de paraffine(s) ou des cires de polyéthylène.

**7.** Composition selon la revendication 2, caractérisée en ce que les silicones sont présentes sous forme d'huiles, de graisses, de résines, de pâtes ou d'émulsions d'huile.

**8.** Composition selon la revendication 2, caractérisée en ce que les savons de métaux sont des sels d'acides gras des métaux magnésium, calcium, zinc, aluminium ou plomb, éventuellement des sels de l'acide stéarique de ces métaux.

**9.** Composition selon la revendication 2, caractérisée en ce que les poudres minérales sont du graphite, du talc ou du mica.

**10.** Variante de la composition selon la revendication 1, caractérisée en ce que des tiers-solvants ou adjuvants de dissolution usuels sont contenus en des quantités de 1 à 80 % en poids, avantageusement 10 à 30 % en poids, par rapport au mélange total.

**11.** Composition selon la revendication 10, caractérisée en ce que, comme adjuvants de dissolution, sont présents des hydrocarbures aliphatiques, avantageusement des fractions d'essence ayant un intervalle d'ébullition allant par exemple de 100 à 140°C.

**12.** Utilisation de compositions selon l'une des revendications précédentes comme agents de séparation, de glissement ou agents de décoffrage.

**13.** Procédé de préparation de compositions selon l'une des revendications 1 à 11, caractérisé en ce qu'on incorpore, par mélangeage dans le dichloromonofluoréthane dissolvant, un ou plusieurs agents ayant des propriétés d'activité de séparation, l'incorporation ayant lieu en une quantité, rapportée au mélange global, de 0,1 à 80 %, avantageusement 0,1 à 35 % en poids, ainsi que, éventuellement, des adjuvants usuels de dissolution.